# EUROPEAN PATENT APPLICATION

(11) **EP 4 826 565 A1**
(43) Date of publication of application: **21.10.2026**
(21) Application number: 24902422.5
(22) Date of filing: 01.11.2024
(51) Int. Cl.: G06F 16/583

(54) **MULTIMODAL LARGE LANGUAGE MODEL TRAINING METHOD, CORRELATION CALCULATION METHOD, AND LABEL GENERATION METHOD**

(30) Priority: 14.12.2023 CN 202311724117
(71) Applicant: Hangzhou Alibaba International Internet Industry Co., Ltd., Hangzhou, Zhejiang 310052 (CN)
(72) Inventor: GUO, Yuankai, Beijing 100020 (CN); LIU, Kai, Beijing 100020 (CN); ZHAO, Rongxun, Beijing 100020 (CN)
(74) Representative: Wu, Ting
(86) International application number: PCT/CN2024/129489
(87) International publication number: WO 2025/123998

(57) **Abstract**

The present disclosure provides a multimodal large language model training method, a relevance calculation method, and a label generation method, belonging to the field of artificial intelligence technology. The method comprises: training a pre-trained multimodal large language model based on a sample text feature vector, a sample image feature vector, and a sample first multimodal feature vector obtained by processing image information and text description information of a sample product using the pre-trained multimodal large language model, to obtain a multimodal large language model; and training the multimodal large language model based on a sample search term feature vector, a first multimodal feature vector, and a sample second multimodal feature vector obtained by processing a sample search term, image information, and text description information using the multimodal large language model, to obtain a trained multimodal large language model. The multimodal large language model trained by the present disclosure is capable of simultaneously learning image features associated with both the search term and the text description information, and the generated second multimodal feature vector is more accurate.

## Description

This application claims priority to the Chinese patent application filed with the China National Intellectual Property Administration on December 14, 2023, with application number 202311724117.X, and titled "Multimodal Large Language Model Training Method, Relevance Calculation and Label Generation Method," the entire contents of which are incorporated by reference into the present disclosure.

### TECHNICAL FIELD

The present disclosure relates to the field of artificial intelligence technology, and more particularly to a multimodal large language model training method, a relevance calculation and label generation method.

### BACKGROUND

A multimodal large language model (Multimodal Large Language Model, abbreviated as MLLM) is a deep learning-based natural language processing model capable of processing multiple types of data such as text, images, and audio, thereby completing natural language processing tasks such as search, intelligent question answering, and translation.

Currently, multimodal large language models in the related art can only generate multimodal feature vectors based on one type of text information and image information. In a search scenario, text information typically includes search terms and textual description information of products, whereas multimodal large language models trained using related-art methods can only learn image features related to search terms and generate multimodal feature vectors in which image features related to search terms are enhanced, or learn image features related to textual description information and generate multimodal feature vectors in which image features related to textual description information are enhanced, but cannot simultaneously learn image features related to both search terms and textual description information in a search scenario, resulting in generated multimodal feature vectors that are not sufficiently accurate. Therefore, there is an urgent need to train a new multimodal large language model to generate more accurate multimodal feature vectors to meet the application requirements of search scenarios.

### SUMMARY

Embodiments of the present disclosure provide a multimodal large language model training method, a relevance calculation method, and a label generation method. The multimodal large language model trained by the method is capable of simultaneously learning image features related to both search terms and textual description information, and the generated second multimodal feature vector is more accurate, thereby meeting the application requirements of search scenarios. The technical solution is as follows:

According to a first aspect, a multimodal large language model training method is provided, the method comprising:
acquiring a sample search term and a sample product, the sample product having image information and text description information;
invoking a pre-trained multimodal large language model to process the image information and text description information of the sample product, to obtain a sample text feature vector, a sample image feature vector, and a sample first multimodal feature vector of the sample product, wherein image features related to text description information are enhanced in the sample first multimodal feature vector;
training the pre-trained multimodal large language model based on the sample text feature vector, the sample image feature vector, and the sample first multimodal feature vector of the sample product, to obtain a multimodal large language model;
invoking the multimodal large language model to process the sample search term and the image information and text description information of the sample product, to obtain a sample search term feature vector and a first multimodal feature vector and a sample second multimodal feature vector of the sample product, wherein image features related to both text description information and search terms are enhanced in the sample second multimodal feature vector;
training the multimodal large language model based on the sample search term feature vector and the first multimodal feature vector and the sample second multimodal feature vector of the sample product, to obtain a trained multimodal large language model, the trained multimodal large language model being configured to generate a second multimodal feature vector of a product based on a search term and image information and text description information of the product.

According to a second aspect, a relevance calculation method is provided, the method applying the trained multimodal large language model described in the first aspect, the method comprising:
obtaining a search term and candidate product retrieved based on the search term, the candidate product having image information and text description information;
calculating a semantic relevance score between the search term and the candidate product based on the search term and the text description information;
invoking the trained multimodal large language model to process the search term, the image information, and the text description information to obtain a second multimodal feature vector of the candidate product and a search term feature vector;
calculating an image-text relevance score between the search term and the candidate product based on the search term feature vector and the second multimodal feature vector;
calculating a total relevance score between the search term and the candidate product based on the semantic relevance score and the image-text relevance score.

In another embodiment of the present disclosure, the calculating an image-text relevance score between the search term and the candidate product based on the search term feature vector and the second multimodal feature vector comprises:
calculating a cosine similarity between the search term feature vector and the second multimodal feature vector to obtain the image-text relevance score.

In another embodiment of the present disclosure, the calculating a total relevance score between the search term and the candidate product based on the semantic relevance score and the image-text relevance score comprises:
performing a weighted calculation on the semantic relevance score and the image-text relevance score to obtain the total relevance score.

In a third aspect, a label generation method is provided, the method applying the trained multimodal large language model according to the first aspect, the method comprising:
invoking the trained multimodal large language model to process a search term, image information, and text description information corresponding to a candidate product to obtain a second multimodal feature vector;
obtaining a first instruction template corresponding to a preset-level category to which the candidate product belongs, the first instruction template being used to describe an attribute to be output for the candidate product;
generating a first label of the candidate product under the preset-level category based on the second multimodal feature vector and the first instruction template.

In a fourth aspect, a multimodal large language model training apparatus is provided, the apparatus comprising:
a first acquisition module, configured to obtain a sample search term and a sample product, the sample product having image information and text description information;
a first processing module, configured to invoke a pre-trained multimodal large language model to process image information and text description information of the sample product, so as to obtain a sample text feature vector, a sample image feature vector, and a sample first multimodal feature vector of the sample product, where image features related to text description information are enhanced in the sample first multimodal feature vector;
a first training module, configured to train the pre-trained multimodal large language model based on the sample text feature vector, the sample image feature vector, and the sample first multimodal feature vector of the sample product, so as to obtain a multimodal large language model;
a second processing module, configured to invoke the multimodal large language model to process the sample search term and the image information and text description information of the sample product, so as to obtain a sample search term feature vector and a first multimodal feature vector and a sample second multimodal feature vector of the sample product, where image features related to text description information and search terms are enhanced in the sample second multimodal feature vector;
a second training module, configured to train the multimodal large language model based on the sample search term feature vector and the first multimodal feature vector and the sample second multimodal feature vector of the sample product, so as to obtain a trained multimodal large language model, the trained multimodal large language model being configured to generate a second multimodal feature vector of a product based on a search term and image information and text description information of the product.

In a fifth aspect, a relevance calculation apparatus is provided, the apparatus applying the trained multimodal large language model according to the first aspect, the apparatus comprising:
an acquisition module, configured to acquire a search term and candidate product retrieved based on the search term, the candidate product having image information and text description information;
a first computation module, configured to calculate a semantic relevance score between the search term and the candidate product based on the search term and the text description information;
a processing module, configured to invoke the trained multimodal large language model to process the search term, the image information, and the text description information, so as to obtain a second multimodal feature vector and a search term feature vector of the candidate product;
a second computation module, configured to calculate an image-text relevance score between the search term and the candidate product based on the search term feature vector and the second multimodal feature vector;
a third computation module, configured to calculate a total relevance score between the search term and the candidate product based on the semantic relevance score and the image-text relevance score.

In a sixth aspect, a label generation apparatus is provided, the apparatus applying the trained multimodal large language model according to the first aspect, the apparatus comprising:
a processing module, configured to invoke the trained multimodal large language model to process a search term, image information, and text description information corresponding to a candidate product, so as to obtain a second multimodal feature vector;
a first acquisition module, configured to acquire a first instruction template corresponding to a preset-level category to which the candidate product belongs, the first instruction template being used to describe an attribute to be output for the candidate product;
a first generation module, configured to generate a first label for the candidate product under the preset-level category based on the second multimodal feature vector and the first instruction template.

In a seventh aspect, an electronic device is provided, comprising a processor and a memory; the memory stores at least one program code; the at least one program code is configured to be invoked and executed by the processor to implement the multimodal large language model training method according to the first aspect, or the relevance calculation method according to the second aspect, or the label generation method according to the third aspect.

In an eighth aspect, a computer-readable storage medium is provided, where the computer-readable storage medium stores at least one computer program, and when the at least one computer program is executed by a processor, the multimodal large language model training method according to the first aspect, or the relevance calculation method according to the second aspect, or the label generation method according to the third aspect can be implemented.

In a ninth aspect, a computer program product is provided, where the computer program product comprises a computer program, and when the computer program is executed by a processor, the multimodal large language model training method according to the first aspect, or the relevance calculation method according to the second aspect, or the label generation method according to the third aspect can be implemented.

The beneficial effects brought by the technical solutions provided by the embodiments of the present disclosure are:
A two-stage training approach is adopted to train the pre-trained multimodal large language model, enabling the trained multimodal large language model to simultaneously learn how to enhance image features associated with both the search term and the textual description information. In the first training stage, the pre-trained multimodal large language model is trained based on the sample image feature vector, sample text feature vector, and sample first multimodal feature vector generated from the image information and textual description information of sample products; during the training process, the pre-trained multimodal large language model learns how to enhance image features associated with the textual description information. After the first training stage, a multimodal large language model is obtained. In the second training stage, based on the multimodal large language model obtained from the first training stage, sample search terms together with the image information and textual description information of sample products are used to train the multimodal large language model; during the training process, the multimodal large language model learns how to enhance image features associated with both the search term and the textual description information. After the second training stage, a trained multimodal large language model is obtained. In the second multimodal feature vector generated by the trained multimodal large language model, image features associated with both the textual description information and the search term are enhanced. Compared to learning only image features associated with the textual description information or only image features associated with the search term, the multimodal large language model trained by the present disclosure acquires more comprehensive knowledge of the search scenario, resulting in a more accurate second multimodal feature vector.

### BRIEF DESCRIPTION OF THE DRAWINGS

In order to more clearly illustrate the technical solutions in the embodiments of the present disclosure or in the prior art, the following briefly introduces the drawings that are required for use in the description of the embodiments or the prior art. Obviously, the drawings described below are some embodiments of the present disclosure, and a person of ordinary skill in the art can obtain other drawings based on these drawings without any creative effort.
FIG. 1 is a schematic structural diagram of a pre-trained multimodal large language model provided by an embodiment of the present disclosure;
FIG. 2 is a schematic diagram of an application process of a multimodal large language model in a search scenario provided by an embodiment of the present disclosure;
FIG. 3 is a schematic diagram of a process of performing relevance calculation based on a multimodal large language model provided by an embodiment of the present disclosure;
FIG. 4 is a schematic diagram of a generation process of generating product labels based on a multimodal large language model provided by an embodiment of the present disclosure;
FIG. 5 is a schematic diagram of an implementation environment involved in the multimodal large language model training method, the relevance calculation method, and the label generation method provided by an embodiment of the present disclosure;
FIG. 6 is a flowchart of a multimodal large language model training method provided by an embodiment of the present disclosure;
FIG. 7 is a flowchart of a relevance calculation method provided by an embodiment of the present disclosure;
FIG. 8 is a flowchart of a label generation method provided by an embodiment of the present disclosure;
FIG. 9 is a schematic structural diagram of a multimodal large language model training apparatus provided by an embodiment of the present disclosure;
FIG. 10 is a schematic structural diagram of a relevance calculation apparatus provided by an embodiment of the present disclosure;
FIG. 11 is a schematic structural diagram of a label generation apparatus provided by an embodiment of the present disclosure;
FIG. 12 illustrates a structural block diagram of an electronic device provided by an exemplary embodiment of the present disclosure.

### DETAILED DESCRIPTION OF THE EMBODIMENTS

To make the objectives, technical solutions, and advantages of the present disclosure clearer, the implementations of the present disclosure will be further described in detail below with reference to the accompanying drawings.

It should be understood that the terms "each," "a plurality of," and "any" as used in the embodiments of the present disclosure, where a plurality means two or more, each refers to every one of the corresponding plurality, and any refers to any one of the corresponding plurality. For example, a plurality of words includes 10 words, each word refers to every one of these 10 words, and any word refers to any one of the 10 words.

It should be noted that user information (including but not limited to user device information, user personal information, etc.) and data (including but not limited to data used for analysis, stored data, displayed data, etc.) involved in the present disclosure are information and data authorized by users or fully authorized by all parties, and the collection, use, and processing of relevant data must comply with relevant laws, regulations, and standards of relevant countries and regions, and corresponding operation portals are provided for users to choose to authorize or refuse. For example, search terms, user preference information, and other information involved in the present disclosure are obtained under full authorization.

Before implementing the embodiments of the present disclosure, the terms involved in the embodiments of the present disclosure are first explained.

A large language model (Large Language Model, abbreviated as LLM) refers to a deep learning model trained using large amounts of text data, which can generate natural language text or understand the meaning of language text. Large language models can handle a variety of natural language processing tasks, such as text classification, intelligent question answering, dialogue, etc., and represent an important pathway toward artificial intelligence.

BLIP2 (Bootstrapping Language-Image Pre-training with Frozen Image Encoders and Large Language Models, a bootstrapping model for language-image pre-training with frozen image encoders and large language models) is a multimodal transformer model, mainly used for addressing the problem of excessively high computational cost caused by end-to-end training of VLP (Vision-Language Pre-training) models.

CLIP (Contrastive Language-Image Pre-Training) is a cross-modal pre-trained model based on contrastive image-text learning.

Instruction learning is used to prompt or instruct large language models, thereby eliciting better output results.

Artificial intelligence is a theory, method, technology, and application system that uses digital computers or machines controlled by digital computers to simulate, extend, and expand human intelligence, perceive environments, acquire knowledge, and use knowledge to obtain results. In other words, artificial intelligence is a comprehensive technology of computer science that attempts to understand the essence of intelligence and produce a new type of intelligent machine capable of responding in a manner similar to human intelligence. Artificial intelligence is also the study of the design principles and implementation methods of various intelligent machines, enabling machines to have the functions of perception, reasoning, and decision-making.

With the research and advancement of artificial intelligence technology, artificial intelligence technology has been researched and applied in multiple fields, such as common applications including smart homes, smart wearable devices, virtual assistants, smart speakers, smart marketing, unmanned driving, autonomous driving, drones, robots, smart healthcare, smart customer service, and others. It is believed that with the development of technology, artificial intelligence technology will be applied in more fields and will play an increasingly important role. The embodiments of the present disclosure provide solutions relating to technologies such as natural language processing in artificial intelligence, which will be described in detail through subsequent embodiments. Natural language processing is an important direction in the field of computer science and the field of artificial intelligence. It studies various theories and methods that enable effective communication between humans and computers using natural language. Natural language processing is a discipline that integrates linguistics, computer science, and mathematics into a unified science. Therefore, research in this field involves natural language, i.e., the language people use in daily life, and thus it is closely related to research in linguistics. Natural language processing technology generally includes technologies such as text processing, semantic understanding, machine translation, robot question answering, and knowledge graphs.

In a search scenario, products retrieved based on a search term typically have image information and text description information (for example, title, product detail page information, category to which the product belongs, style, model number, etc.). For ease of subsequent application, a multimodal large language model is invoked to perform fusion processing on the image information of the product and the relevant text information (text description information or search term), so as to obtain a multimodal feature vector in which image features related to the text information are enhanced. Multimodal large language models in the related art undergo only a single-stage training, either learning how to enhance image features related to search terms, or learning how to enhance image features related to text description information. In practice, the image of a product is related not only to the search term but also to the text description information of the product itself. However, multimodal large language models in the related art can only generate a multimodal fused feature vector in which image features related to one type of text information (search term or text description information) are enhanced. Therefore, the multimodal large language model trained by the related art is not sufficiently accurate and cannot meet the application requirements in search scenarios.

To this end, embodiments of the present disclosure provide a multimodal large language model training method, which adopts a two-stage training approach. In the first training stage, the pre-trained multimodal large language model is trained based on image information and text description information of sample products, enabling the multimodal large language model to learn how to enhance image features associated with text description information, thereby generating a first multimodal feature vector with higher accuracy. In the second training stage, based on sample search terms and image information and text description information of sample products, the multimodal feature vectors trained in the first training stage are further trained, enabling the trained multimodal large language model to learn how to enhance image features associated with text description information and search terms - specifically, to learn how to enhance features related to search terms in the first multimodal feature vector, thereby generating a second multimodal feature vector with higher accuracy.

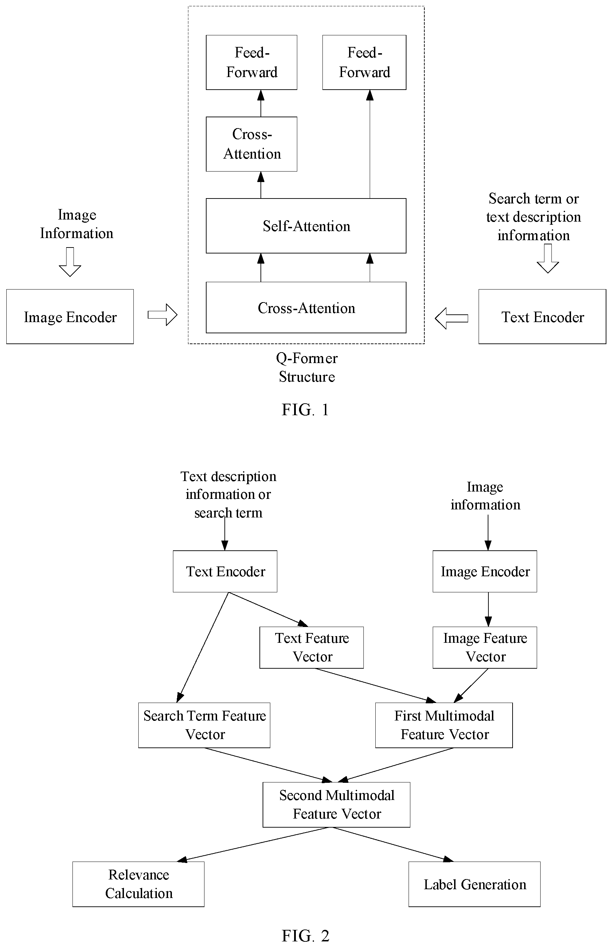

FIG. 1 illustrates a schematic structural diagram of a multimodal large language model involved in the embodiments of the present disclosure. Referring to FIG. 1, the multimodal large language model includes an image encoder, a text encoder, and a Q-Former structure, among others.

The image encoder is configured to encode image information to obtain an image feature vector. The image information includes the product's main image, main image dimensions, contrast, chromaticity, and other information. The text encoder is configured to encode text description information (or search terms) to obtain a text feature vector (or search term feature vector). The image feature vector encoded by the image encoder and the text feature vector (or search term feature vector) encoded by the text encoder have the same number of dimensions, for example, both are 768 dimensions, etc., so that the Q-Former structure can perform fusion processing on the image feature vector and the text feature vector (or search term feature vector).

The Q-Former structure's input consists of two types of feature vectors, and the output is a multimodal feature vector obtained by fusing the two types of feature vectors, wherein the number of dimensions of the input feature vectors and the output feature vectors are the same. The Q-Former structure comprises at least one self-attention module, at least one cross-attention module, and at least one feed-forward module. The self-attention module is used for computing the correlation between each element and other elements in the input feature vectors. The cross-attention module is used for computing attention between the two input feature vectors to calculate the association relationship between the two feature vectors. The feed-forward module is used for enhancing the Q-Former structure's nonlinear fitting capability. It can be understood that the Q-Former structure shown in FIG. 1 (comprising two cross-attention modules, one self-attention module, and two feed-forward modules) is merely an exemplary structure, and the quantities of the cross-attention modules, self-attention modules, and feed-forward modules may be adjusted according to actual computational requirements, and the positions of the cross-attention modules and self-attention modules may also be adjusted.

The multimodal large language model shown in FIG. 1 has different inputs and outputs at different stages, and the following provides a detailed description for each stage.

In the first training stage, the corresponding multimodal large language model is the pre-trained multimodal large language model . For any sample product, the image information of the sample product is input into the pre-trained multimodal large language model's image encoder, and after encoding by the image encoder, a sample image feature vector is output. The text description information of the sample product is input into the pre-trained multimodal large language model's text encoder, and after encoding by the text encoder, a sample text feature vector is output. The sample image feature vector and the sample text feature vector are input into the pre-trained multimodal large language model's Q-Former structure, and are sequentially processed through the cross-attention module, the self-attention module, the cross-attention module, and the feed-forward module, to output a sample first multimodal feature vector. Then, the pre-trained multimodal large language model is trained based on the sample first multimodal feature vectors, sample image feature vectors, and sample text feature vectors of multiple sample products.

In the second training stage, the corresponding multimodal large language model is the multimodal large language model trained in the first training stage. For any sample product, the image information of the sample product is input into the image encoder of the multimodal large language model trained in the first training stage, encoded by the image encoder, and an image feature vector is output. The text description information of the sample product is input into the multimodal large language model trained in the first training stage's text encoder, encoded by the text encoder, and a text feature vector is output. The image feature vector and the text feature vector are input into the multimodal large language model trained in the first training stage's Q-Former structure, and are sequentially processed by the cross-attention module, the self-attention module, the cross-attention module, and the feed-forward module, and a first multimodal feature vector is output. Then, the sample search term is input into the text encoder of the multimodal large language model trained in the first training stage, encoded by the text encoder, and a sample search term feature vector is output. Then, the sample search term feature vector and the first multimodal feature vector are input into the Q-Former structure of the multimodal large language model trained in the first training stage, and are sequentially processed by the cross-attention module, the self-attention module, the cross-attention module, and the feed-forward module, and a sample second multimodal feature vector is output. Then, based on the sample second multimodal feature vectors of the plurality of sample products, the multimodal large language model trained in the first training stage is trained to obtain a trained multimodal large language model.

In a search scenario, for a candidate product retrieved based on a search term, a relevance score between the search term and the candidate product may be calculated, so that a plurality of candidate products may be ranked in descending order of relevance score to improve the click-through rate and conversion rate of users. Currently, when related technologies calculate the relevance score between a search term and a candidate product, they acquire a search term feature vector corresponding to the search term, and acquire text description information of the candidate product corresponding to a text feature vector, and then calculate the semantic relevance score between the search term feature vector and the text feature vector as the relevance score between the search term and the candidate product. This method only considers the semantic relevance score between the search term and the text description information of the candidate product, resulting in a relatively single dimension of relevance calculation and insufficiently accurate calculation results. In particular, when there exist problems such as a mismatch between the title and image of a candidate product, or the title of the candidate product being stacked with keywords and inconsistent with the content of the candidate product, or the title of the candidate product being too short, the semantic relevance score calculation results themselves are not sufficiently reliable and cannot represent the relevance between the search term and the candidate product.

To improve the accuracy of relevance calculation results, the embodiments of the present disclosure, building upon the original relevance calculation, take into account the image-text relevance between the image information of candidate product and the search term, thereby adding a relevance calculation dimension. Specifically, based on the trained multimodal large language model, a second multimodal feature vector and a search term feature vector of the candidate product are generated, and then, based on the second multimodal feature vector and the search term feature vector, an image-text relevance score between the candidate product and the search term is calculated; the semantic relevance score and the image-text relevance score are then subjected to weighted calculation to obtain the total relevance score between the candidate product and the search term. The calculation method of the embodiments of the present disclosure characterizes the relevance between the candidate product and the search term from multiple perspectives, yielding more reliable relevance calculation results. Furthermore, the regularized relevance between the search term and user preference information is also taken into account, and by performing weighted calculation on the semantic relevance score, the image-text relevance score, and the regularized relevance score, the total relevance score between the candidate product and the search term is obtained; compared with calculating only the semantic relevance score, or calculating only the semantic relevance score and the image-text relevance score, the calculation results are more accurate.

In a search scenario, for candidate products searched based on a search term, appropriate labels may also be generated for the searched candidate product, and the generated labels may be words representing attributes, such as style, design, and model number, etc., and may also be phrases containing specific scenarios, such as European and American style clothing, Japanese and Korean style clothing, summer clothing, winter clothing, etc., thereby better displaying products based on user profiles and search results, so as to improve the click-through rate and conversion rate of users. In related technologies, when generating labels for a candidate product, a discriminative model is typically trained based on a deep neural network, and then the discriminative model is invoked to process relevant information of the candidate product (e.g., main image, title, model number, etc.), to obtain the probability of each candidate label, and then the label with the highest probability is used as the label for that candidate product. Related technologies are heavily reliant on manually predefined labels, and the number and content of manually predefined labels are fixed and cannot be dynamically adjusted according to user needs in the search scenario; thus, the label generation method of related technologies is not sufficiently flexible and has certain limitations.

In order to flexibly generate labels for candidate products according to user needs, the embodiments of the present disclosure set different instruction templates (prompts) for different-level categories in advance based on actual application scenarios, and generate second multimodal feature vectors of candidate products based on the trained multimodal large language model, and then guide the large language model using the instruction template corresponding to a certain-level category of the candidate product corresponding to that level, and the large language model performs instruct learning based on the instruction template, and generates appropriate labels for the candidate product by combining information such as the title and image of the candidate product indicated by the second multimodal feature vector. The method provided by the embodiments of the present disclosure eliminates the need to manually predefine labels for products, making the label generation approach more flexible.

The trained multimodal large language model trained in the embodiments of the present disclosure can be used to calculate the relevance between a candidate product retrieved based on a search term and the search term, and can also be used to generate labels for the candidate product. FIG. 2 illustrates a schematic diagram of the application process of the trained multimodal large language model. Referring to FIG. 2, for any candidate product, the text description information of the candidate product is input into the text encoder of the trained multimodal large language model to output a text feature vector of the candidate product, and the image information of the candidate product is input into the image encoder of the trained multimodal large language model to output an image feature vector of the candidate product. The text feature vector and the image feature vector of the candidate product are then fused to obtain a first multimodal feature vector. Next, the search term is input into the text encoder of the trained multimodal large language model to output a search term feature vector. Then, the first multimodal feature vector and the search term feature vector are fused to obtain a second multimodal feature vector. Based on the obtained second multimodal feature vector, relevance calculation can be performed, and labels can also be generated for the candidate product.

It should be noted that the above description takes the example of first fusing the text feature vector and the image feature vector, and then inputting the search term into the text encoder. It is also possible to sequentially input the text description information and the search term into the text encoder, and after outputting the text feature vector and the search term feature vector, then perform fusion of the text feature vector and the image feature vector. The embodiments of the present disclosure do not limit the timing at which the search term is input to the text encoder.

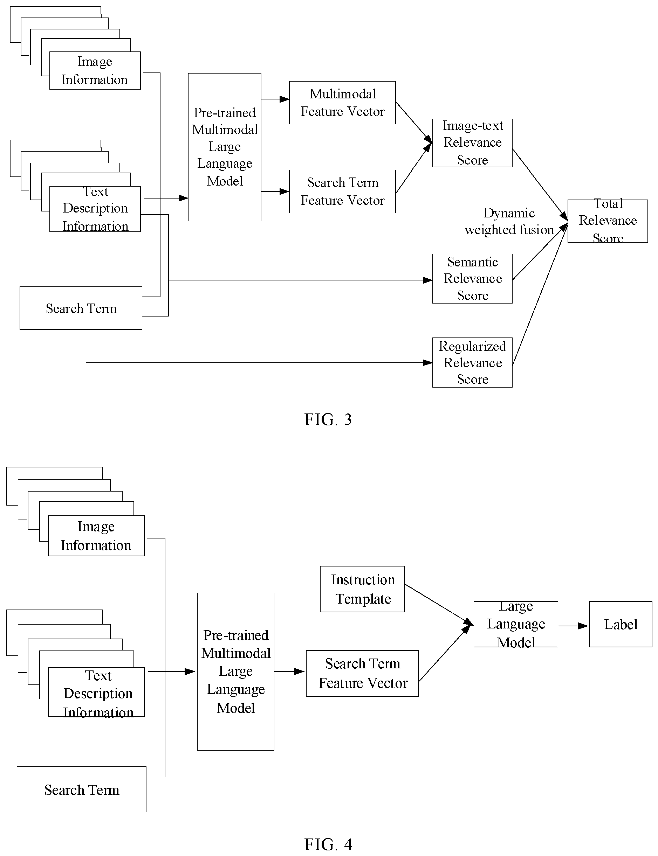

FIG. 3 illustrates a schematic diagram of a computation process for relevance calculation based on a multimodal large language model provided by an embodiment of the present disclosure. Referring to FIG. 3, the relevance calculation process includes a pre-processing stage and an application process. The pre-processing stage is the process of training a pre-trained multimodal large language model to obtain a trained multimodal large language model; specifically, a sample search term and image information and text description information of a sample product are used to train the pre-trained large language model to obtain a multimodal large language model. The application process is the process of calculating an image-text relevance score between a candidate product and a search term based on a search term feature vector and a second multimodal feature vector generated by the trained multimodal large language model, and then calculating a total relevance score of the candidate product; specifically, when a plurality of candidate products are retrieved based on a search term, for any one candidate product, the trained multimodal large language model may be invoked to process the search term and the image information and text description information of the candidate product to obtain a search term feature vector and a second multimodal feature vector, and then based on the search term feature vector and the second multimodal feature vector, calculate the image-text relevance score between the candidate product and the search term. Meanwhile, a semantic relevance score between the candidate product and the search term may be calculated based on the search term and the text description information of the candidate product. A regularized relevance score between the candidate product and the search term may also be calculated based on the search term and user preference information. Finally, a weighted calculation is performed on the semantic relevance score, the regularized relevance score, and the image-text relevance score to obtain the total relevance score between the candidate product and the search term.

FIG. 4 illustrates a schematic diagram of a generation process for generating labels for candidate products based on a multi-modal large language model provided by an embodiment of the present disclosure. Referring to FIG. 4, the label generation process includes a pre-processing stage and an application process. The pre-processing stage is the process of training a pre-trained multimodal large language model to obtain a trained multimodal large language model. Specifically, sample search terms and image information and text information of sample products are used to train the pre-trained large language model to obtain a multimodal large language model. The application process is the process of generating labels for candidate products based on the second multimodal feature vector generated by an instruction template and the trained multimodal large language model, specifically, when multiple candidate products are retrieved based on a search term, for any one candidate product, the trained multimodal large language model may be invoked to process the search term and the image information and text information of the candidate product to obtain a second multimodal feature vector; then, the instruction template corresponding to the candidate product is acquired; and then the large language model is invoked to process the second multimodal feature vector and the instruction template, thereby generating a corresponding label for the candidate product.

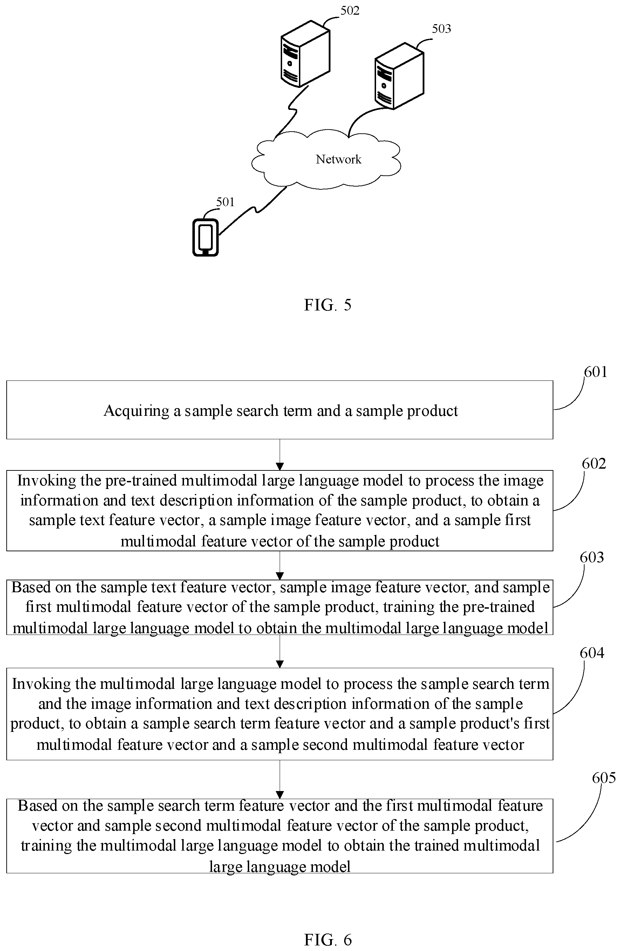

Please refer to FIG. 5, which illustrates the implementation environment involved in the multimodal large language model training method, the relevance calculation method, and the label generation method provided by the embodiments of the present disclosure. Referring to FIG. 5, the implementation environment includes: terminal 501, server 502, and server 503.

Here, terminal 501 may be a smartphone, tablet computer, laptop computer, desktop computer, smart speaker, smart watch, or the like, but is not limited thereto. Server 502 and server 503 may be independent physical servers, may be a server cluster or distributed system composed of multiple physical servers, or may be a cloud server providing basic cloud computing services such as cloud services, cloud databases, cloud computing, cloud functions, cloud storage, network services, cloud communications, middleware services, domain name services, security services, CDN (Content Delivery Network), and big data and artificial intelligence platforms. The aforementioned terminal 501, server 502, and server 503 may be connected directly or indirectly via wired or wireless communication means, and the present disclosure does not impose any specific limitation thereon.

For the multimodal large language model training process, terminal 501 is configured to acquire sample search terms input by a user, and send a search request to server 502, so that server 502 returns a plurality of searched sample products, where each sample product has image information and text description information. Server 502 has strong computation capability and is able to search for a plurality of sample products based on the sample search terms. Server 503 likewise has strong computation capability and is able to train a multimodal large language model based on the sample search terms and the image information and text description information of the plurality of sample products; the specific training process will not be described in detail here. After the multimodal large language model has been trained, it may be directly deployed on server 503, or may be ported to other servers.

For the relevance calculation process, terminal 501 is configured to obtain a search term input by a user and send a search request to server 502, so that server 502 returns a plurality of searched candidate products, each candidate product having image information and text description information. Server 502 has strong computation capability and is capable of searching for a plurality of candidate products based on a search term. If server 502 has deployed thereon a plurality of large language models including a trained multimodal large language model, then server 502 may, based on the search term, text description information and image information of each candidate product, and user preference information, calculate a total relevance score between the search term and each candidate product, and then return the plurality of searched candidate products to terminal 501 in descending order of total relevance score. If server 502 has deployed thereon a plurality of large language models other than a trained multimodal large language model, while server 503 has deployed thereon a trained multimodal large language model, then server 502 may invoke the multimodal large language model deployed on server 503 to calculate an image-text relevance score between the search term and each candidate product, and invoke the deployed large language model to calculate a semantic relevance score between the search term and each candidate product, and calculate a regularized relevance score between the search term and each candidate product based on user preference information, the search term, and the like, and then, based on the semantic relevance score, image-text relevance score, and image-text relevance score between the search term and each candidate product, calculate a total relevance score between the search term and each candidate product.

For the label generation process, terminal 501 is configured to obtain a search term input by a user and send a search request to server 502, so that server 502 returns a plurality of searched candidate products, each candidate product having image information and text description information. Server 502 has strong computation capability and is capable of searching for a plurality of candidate products based on a search term. If server 502 has deployed thereon a plurality of large language models including a trained multimodal large language model, and has stored thereon instruction templates corresponding to categories of different levels, then server 502 may invoke the multimodal large language model, to process the search term, text description information and image information of each candidate product, obtain a second multimodal feature vector corresponding to each candidate product, acquire an instruction template corresponding to a certain-level category of each candidate product, and then invoke the large language model to process the second multimodal feature vector and instruction template corresponding to each candidate product to obtain a label for each candidate product. If server 502 has stored thereon instruction templates corresponding to categories of different levels but has not deployed thereon a trained multimodal large language model, while server 503 has deployed thereon a trained multimodal large language model, server 502 may invoke the multimodal large language model deployed on server 503, to process the search term, text description information and image information of each candidate product, obtain a second multimodal feature vector corresponding to each candidate product, acquire an instruction template corresponding to a certain-level category of each candidate product, and then invoke the large language model to process the second multimodal feature vector and instruction template corresponding to each candidate product to obtain a label for each candidate product.

Based on the implementation environment shown in FIG. 5, the disclosed embodiments provide a multimodal large language model training method. Taking server 503 executing the disclosed embodiments as an example, referring to FIG. 6, the method flow provided by the disclosed embodiments includes:
601: acquiring a sample search term and a sample product.

The sample search term and the sample product are training samples for training the multimodal large language model. The sample search term may be input by a user, and the sample product may be obtained by searching based on the sample search term. When searching for sample products based on the sample search term, the search may be performed based on at least one of the following: the original text of the sample search term, the semantic vector of the sample search term, user preference information, and rewritten terms of the sample search term (i.e., terms that are semantically identical or similar to the sample search term). Since the multimodal large language model to be trained in the disclosed embodiments needs to fuse the image information and text description information of a product, therefore, for the products retrieved based on each search term, manual or other machine-based methods may be used for screening, retaining products that have both image information and text description information, and removing products that have image information but no text description information, or that have text description information but no image information, ultimately obtaining a plurality of sample products.

For ease of managing training samples, sample products corresponding to each sample search term may be organized as one training batch, and training batches corresponding to multiple sample search terms may be combined to form a training sample set. Each training batch includes multiple sample products corresponding to a sample search term, and these sample products include positive sample products and negative sample products. The meanings of positive sample products and negative sample products included in each training batch differ across different training stages. In the first training stage, a positive sample product is a sample product whose image information and text information originate from the same product; a negative sample product is a sample product whose image information and text information originate from different products, and such negative sample product may be obtained by performing negative sampling on multiple sample products retrieved by multiple sample search terms, that is, by combining the image information of a sample product retrieved by one sample search term with the text description information of a sample product retrieved based on another sample search term to obtain a combined result. In the second training stage, a positive sample product is a sample product that matches the sample search term, that is, a sample product retrieved based on the sample search term corresponding to the training batch; a negative sample product is a sample product that does not match the sample search term, that is, a sample product not retrieved based on the sample search term corresponding to the training batch, and such negative sample product may be obtained by performing negative sampling on multiple sample products retrieved by multiple sample search terms, that is, by combining a sample product retrieved by one sample search term with another sample search term to obtain a combined result.

Furthermore, in order to better accomplish the training tasks (i.e., objective functions) set when training the multimodal large language model in the embodiments of the present disclosure, for both the first training stage and the second training stage, one positive sample product and a plurality of negative sample products may be combined to form a training batch.

Further, for ease of subsequent calculation, for each sample product, image normalization processing may be performed on its corresponding image information, and text normalization processing may be performed on its corresponding text description information. Here, the image normalization processing includes scaling, resizing, and the like. The text normalization processing includes removing stop words (e.g., the, an, that, etc.), word form normalization (e.g., unifying singular and plural forms), etc.

602: invoking the pre-trained multimodal large language model to process the image information and text description information of the sample product, to obtain a sample text feature vector, a sample image feature vector, and a sample first multimodal feature vector of the sample product.

The pre-trained multimodal large language model may be BLIP2, CLIP, etc.

Specifically, invoking a pre-trained multimodal large language model to process image information and text description information of a sample product, so as to obtain a sample text feature vector, a sample image feature vector, and a sample first multimodal feature vector of the sample product, comprises:
6021: invoking the pre-trained multimodal large language model to perform feature extraction on the text description information of the sample product, obtaining a sample text feature vector of the sample product.

In the present disclosure, the pre-trained multimodal large language model includes a text encoder, and the text encoder is used to encode text description information. When the text description information of each sample product is input into the text encoder, the text encoder extracts text features and encodes them, obtaining the sample text feature vector of each sample product.

6022: performing feature extraction on the image information of the sample product, obtaining a sample image feature vector of the sample product.

The pre-trained multimodal large language model of the present disclosure includes an image encoder, and the image encoder is used to encode image information. When the image information of each sample product is input into the image encoder, the image encoder extracts image features and encodes them, obtaining the sample image feature vector of each sample product.

6023: fusing the sample text feature vector of the sample product and the sample image feature vector, obtaining the sample first multimodal feature vector of the sample product.

The pre-trained multimodal large language model of the present disclosure includes a Q-Former structure, and the Q-Former structure is used to fuse input feature vectors. For each sample product, when the sample text feature vector and the sample image feature vector of the sample product are input into the Q-Former structure, the sample text feature vector and the sample image feature vector are processed by the Q-Former structure through the cross-attention module, self-attention module, feed-forward module, and the like, to perform processing, thereby obtaining the sample first multimodal feature vector of the sample product, where the sample first multimodal feature vector is a feature vector obtained by fusing the sample text feature vector and the sample image feature vector, and in the sample first multimodal feature vector, the image features associated with textual description information are enhanced; when the pre-trained multimodal large language model is trained using the sample first multimodal feature vector, the trained multimodal large language model can learn how to enhance the image features associated with textual description information in the image feature vector.

603: based on the sample text feature vector, sample image feature vector, and sample first multimodal feature vector of the sample product, training the pre-trained multimodal large language model to obtain the multimodal large language model.

The sample product is annotated with a label characterizing the correlation between the image information and the text description information, including a relevance label and an irrelevance label. If the sample product is a positive sample product, the label annotated on the sample product is a relevance label; if the sample product is a negative sample product, the label annotated on the sample product is an irrelevance label.

Specifically, training the pre-trained multimodal large language model based on the sample text feature vector, sample image feature vector, and sample first multimodal feature vector of a sample product, to obtain a multimodal large language model, comprises:

6031: based on the sample first multimodal feature vector of the sample product, acquiring a label characterizing the correlation between the image information and the text description information of the sample product.

In the disclosed embodiments, on the basis of the pre-trained multimodal large language model, a fully connected layer is added, and the fully connected layer corresponds to a binary classification training task. By inputting the sample first multimodal feature vector of each sample product into the fully connected layer, the output is a label characterizing the correlation between the image information and the text description information of each sample product.

6032: based on the first overall objective loss function, the sample text feature vector and the sample image feature vector of the sample product, and the generated label and annotated label corresponding to the sample product, training the pre-trained multimodal large language model to obtain the multimodal large language model.

To better adapt to downstream tasks, the disclosed embodiments add two training tasks for each of the two training stages, namely the image-text matching task (Image-Text Matching, abbreviated as ITM) and the image-text contrastive task (Image-Text Contrastive Learning, abbreviated as ITC), which aim to establish matching and correspondence relationships between images and text, align the representations of images and text, and maximize their mutual information, thereby obtaining multimodal feature vectors.

The image-text matching task is a binary classification task that requires the model to predict whether an image-text pair matches or does not match. For the first training stage, the objective of the image-text matching task is that the annotated label characterizing the correlation between the image information and the text description information corresponding to each sample product is consistent with the generated label. For the second training stage, the objective of the image-text matching task is that the annotated label characterizing the correlation between the sample search term and the first multimodal feature vector corresponding to each sample product is consistent with the generated label.

The image-text contrastive learning task aims to maximize the similarity of positive samples and minimize the similarity of negative samples. For the first training stage, the objective of the image-text matching task is to make the distance between the relevant sample image feature vectors and sample text feature vectors as close as possible, and to make the distance between the irrelevant sample image feature vectors and sample text feature vectors as far apart as possible; for the second training stage, the objective of the image-text matching task is to make the distance between the relevant sample search term feature vectors and first multimodal feature vectors as close as possible, and to make the distance between the irrelevant sample search term feature vectors and first multimodal feature vectors as far apart as possible.

For the above two training tasks in the two training stages, different total objective loss functions are set respectively. The first training stage corresponds to the first overall objective loss function, the first overall objective loss function includes a first image-text matching loss function and a first image-text contrastive loss function, the first image-text matching loss function is required to complete the image-text matching loss task of the first training stage, and the first image-text contrastive loss function is required to complete the image-text contrastive learning task of the first training stage; the second training stage corresponds to the second overall objective loss function, the second overall objective loss function includes a second image-text matching loss function and a second image-text contrastive loss function, the second image-text matching loss function is required to complete the image-text matching loss task of the second training stage, and the second image-text contrastive loss function is required to complete the image-text contrastive learning task of the second training stage.

In the first training stage, based on the first overall objective loss function, the sample text feature vector of the sample product and the sample image feature vector, and the generated label and annotated label corresponding to the sample product, training the pre-trained multimodal large language model to obtain the multimodal large language model comprises the following steps:
60321: inputting the generated label and the annotated label corresponding to the sample product into the first image-text matching loss function to obtain the first image-text matching loss function value.
60322: inputting the sample text feature vector and the sample image feature vector into the first image-text contrastive loss function to obtain the first image-text contrastive loss function value.
60323: determining the first overall objective loss function value based on the first image-text matching loss function value and the first image-text contrastive loss function value.

Acquiring the respective weight values corresponding to the first image-text matching loss function and the first image-text contrastive loss function in the first overall objective loss function, performing a weighted calculation on the first image-text matching loss function value and the first image-text contrastive loss function value to obtain the first overall objective loss function value.

60324: adjusting the model parameters of the pre-trained multimodal large language model based on the first overall objective loss function value to obtain the multimodal large language model.

The optimization objective of the first training stage is to minimize the first overall objective loss function value. If the first overall objective loss function value is greater than the first preset threshold, the model parameters of the pre-trained multimodal large language model need to be adjusted, and then, based on the pre-trained multimodal large language model with the adjusted model parameters, the image information and text description information of each sample product are processed to obtain the sample image feature vector, sample text feature vector, and sample first multimodal feature vector of each sample product. Subsequently, based on the sample image feature vector, sample text feature vector, and sample first multimodal feature vector of each sample product, the pre-trained multimodal large language model with the adjusted model parameters is trained until the function value of the obtained first overall objective loss function is less than the first preset threshold, or the number of training iterations reaches the iteration count threshold. The pre-trained multimodal large language model obtained at the end of training is used as the multimodal large language model trained in the first training stage (hereinafter referred to as the multimodal large language model for convenience of subsequent description), and is further retrained through the second training stage.

604: invoking the multimodal large language model to process the sample search term and the image information and text description information of the sample product, to obtain a sample search term feature vector and a sample product's first multimodal feature vector and a sample second multimodal feature vector.

Here, the image features related to both the textual description information and the search term in the sample second multimodal feature vector are enhanced. In the second training stage, the multimodal large language model trained in the first stage is trained on a per-training-batch basis. Each training batch includes multiple sample products, and the multiple sample products include positive sample products and negative sample products.

Specifically, invoking a multimodal large language model to process the sample search term and the image information and text description information of a sample product to obtain a sample search term feature vector and a first multimodal feature vector and a sample second multimodal feature vector of the sample product, comprises:

6041: invoking the multimodal large language model to perform feature extraction on the text description information of the sample product to obtain the text feature vector of the sample product.

The multimodal large language model trained in the first training stage includes a text encoder, which is used to encode the text description information. When the text description information of each sample product is input into the text encoder, the text encoder extracts text features and encodes them to obtain the text feature vector of each sample product.

6042: performing feature extraction on the image information of the sample product to obtain the image feature vector of the sample product.

The multimodal large language model trained in the first training stage includes an image encoder, which is used to encode the image information. When the image information of each sample product is input into the image encoder, the image encoder extracts image features and encodes them to obtain the image feature vector of each sample product.

6043: fusing the text feature vector of the sample product and the image feature vector to obtain the first multimodal feature vector of the sample product.

The multimodal large language model trained in the first training stage includes a Q-Former structure, and the Q-Former structure is used to fuse the input feature vectors. For each sample product, when the text feature vector and image feature vector of the sample product are input into the Q-Former structure, the sample text feature vector and image feature vector are processed by the Q-Former structure through the cross-attention module, self-attention module, feed-forward module, and the like, to obtain the first multimodal feature vector of the sample product.

6044: performing feature extraction on the sample search term to obtain the sample search term feature vector.

Inputting the sample search term into the text encoder of the multimodal large language model trained in the first training stage, so that the text encoder extracts search term features and encodes them to obtain the sample search term feature vector.

6045: fusing the sample search term feature vector with the first multimodal feature vector of the sample product to obtain the sample second multimodal feature vector of the sample product.

Inputting the sample search term feature vector and the first multimodal feature vector of each sample product respectively into the Q-Former structure, the sample search term feature vector and the first multimodal feature vector of each sample product are processed through the Q-Former structure's cross-attention module, self-attention module, feed-forward module, and the like, to obtain the sample second multimodal feature vector of each sample product .

605: based on the sample search term feature vector and the first multimodal feature vector and sample second multimodal feature vector of the sample product, training the multimodal large language model to obtain the trained multimodal large language model.

Here, each sample product is annotated with a label characterizing the relevance between the sample product and the sample search term. Specifically, based on the sample search term feature vector and the first multimodal feature vector of each sample product and the sample second multimodal feature vector, training the multimodal large language model to obtain the trained multimodal large language model comprises the following steps:

6051: based on the sample second multimodal feature vector of each sample product, acquiring a label characterizing the relevance between each sample product and the sample search term .

In an embodiment of the present disclosure, a fully connected layer is added on the basis of the multimodal large language model, and the fully connected layer corresponds to a binary classification training task; by inputting the sample second multimodal feature vector of each sample product into the fully connected layer, a label characterizing the relevance between each sample product and the sample search term can be output.

6052: based on the second overall objective loss function, the first multimodal feature vector of each sample product and the sample search term feature vector, and the generated label and annotated label corresponding to each sample product, training the multimodal large language model to obtain the trained multimodal large language model.

The second overall objective loss function includes a second image-text matching loss function and a second image-text contrastive loss function. In the second training stage, based on the second overall objective loss function, the first multimodal feature vector of each sample product and the sample search term feature vector, and the generated label and annotated label corresponding to each sample product, the multimodal large language model is trained to obtain the trained multimodal large language model, comprising the following steps:
60521: inputting the generated label and the annotated label corresponding to each sample product into the second image-text matching loss function to obtain the second image-text matching loss function value.
60522: inputting the first multimodal feature vector of each sample product and the sample search term feature vector into the second image-text contrastive loss function to obtain a second image-text contrastive loss function value.

In an embodiment of the present disclosure, the second image-text contrastive loss function may be expressed as: ${L}_{q} = - log \frac{exp \left(q.\frac{{k}_{+}}{τ}\right)}{exp \left(q.\frac{{k}_{i}}{τ}\right)}$

Here, *L_{q}* is the second image-text contrastive loss function, q is the search term feature vector, k+ is the first multimodal feature vector of the positive sample product in the training batch, i.e., the first multimodal feature vector associated with the search term feature vector, ki is the first multimodal feature vector of the negative sample product in the training batch, i.e., the first multimodal feature vector that is not associated with the search term feature vector, and t is the temperature coefficient (a user-defined hyperparameter).

60523: based on the second image-text matching loss function value and the second image-text contrastive loss function value, determining the second overall objective loss function value.

According to the weight values corresponding to the second image-text matching loss function and the second image-text contrastive loss function in the second overall objective loss function, performing a weighted calculation on the second image-text matching loss function value and the second image-text contrastive loss function value to obtain the second overall objective loss function value.

60524: based on the second overall objective loss function value, adjusting the model parameters of the multimodal large language model to obtain the trained multimodal large language model.

The optimization objective of the second training stage is to minimize the value of the second overall objective loss function. If the second overall objective loss function value is greater than the second preset threshold, the model parameters of the multimodal large language model need to be adjusted, and then, based on the multimodal large language model with adjusted model parameters, the sample search terms and the image information and text information of each sample product are processed to obtain the sample search term feature vector, the first multimodal feature vector of each sample product, and the sample second multimodal feature vector, and then based on the sample search term feature vector, the first multimodal feature vector of each sample product, and the sample second multimodal feature vector, the multimodal large language model with adjusted parameters is trained until the function value of the obtained second overall objective loss function is less than the second preset threshold, or the number of training iterations reaches the iteration count threshold. The multimodal large language model obtained at the end of training is used as the multimodal large language model trained in the second training stage, i.e., the trained multimodal large language model described in the embodiments of the present disclosure, and the trained multimodal large language model is used to generate the second multimodal feature vector of a product based on the search term and the product's image information and text description information.

Through learning in the above two training stages, the trained multimodal large language model has learned how to extract image features associated with the search term and textual description information from the image information of the product; the second multimodal feature vector generated by invoking the trained multimodal large language model is more accurate and is capable of reflecting the features of the product after image-text fusion from multiple perspectives.

All the optional technical solutions described above may be combined in any manner to form optional embodiments of the present disclosure, and are not described herein again.

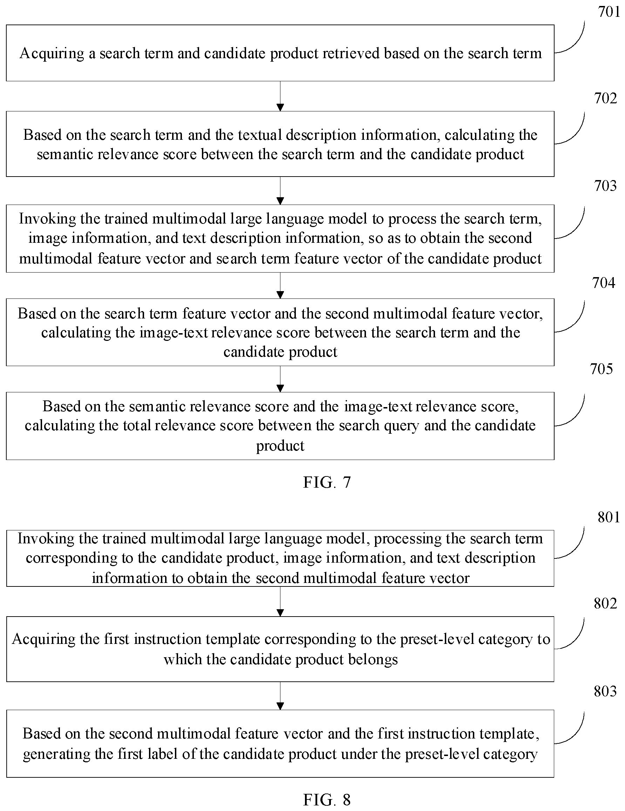

Based on the implementation environment shown in FIG. 5, an embodiment of the present disclosure provides a relevance calculation method. The method applies the trained multimodal large language model of FIG. 6 described above. Taking server 502 as an example for executing the embodiment of the present disclosure, referring to FIG. 7, the method process provided by the embodiment of the present disclosure comprises:
701: acquiring a search term and candidate product retrieved based on the search term.

In an e-commerce search scenario, when a user wishes to purchase a certain product, the user may input a user-defined search term related to that product on a client (e.g., an application, a mini-program, a webpage, etc.) used to provide a purchase service for that product to conduct a search, and in response to the user's search operation on the client, the terminal generates a search request carrying the search term and sends the search request to a server. In response to receiving the search term request sent by the user, the server performs a search based on the search term carried in the search request, obtaining a plurality of candidate products. Each candidate product has image information and text description information, which can describe the candidate product from different angles. When describing these candidate products based on their image information and text description information, it is found that these candidate products have different degrees of relevance to the search term - some candidate products have greater relevance to the search term and some have lesser relevance to the search term, and if the candidate products are simply presented to the user in the order in which they are retrieved, there may be situations where candidate products with lesser relevance are displayed in more prominent positions and candidate products with greater relevance are displayed in less prominent positions, and the user would browse through these candidate products from front to back according to their display positions. Because the candidate products displayed in more prominent positions have lesser relevance to the search term and cannot satisfy the user's search needs, the user would very likely not continue browsing these candidate products, resulting in lower click-through rates and conversion rates for the candidate products. In order to improve recognition accuracy in the field of e-commerce search, the relevance between the search term and the plurality of candidate products may be calculated, so that the candidate products are presented to the user in descending order of relevance, thereby improving the user experience while bringing the candidate products higher user click-through rates and conversion rates.

702: based on the search term and the textual description information, calculating the semantic relevance score between the search term and the candidate product.

Here, the semantic relevance score is used to reflect the degree of relevance between a search term and a candidate product from a semantic perspective. The greater the semantic relevance score, the higher the degree of relevance between the search term and the candidate product from a semantic perspective; the smaller the semantic relevance score, the lower the degree of relevance between the search term and the candidate product from a semantic perspective. For any candidate product, when calculating the semantic relevance score between a search term and that candidate product, the search term and the text description information of that candidate product may be respectively input into the text encoder of a large language model and through the encoding of the text encoder, a search term feature vector and a text feature vector are output, and then the similarity between the search term feature vector and the text feature vector is calculated, and then the similarity calculation result is used as the semantic relevance score between the search term and that candidate product. The large language model mentioned above may be any large language model in the related art that has a text encoder (the reason for not using the multimodal large language model trained in the embodiments of the present disclosure is that every model has a certain computational precision; if one model is used to calculate different relevance scores, the calculation results will be limited by the precision of that model; if different models are used to calculate different relevance scores, then the accuracy of the relevance scores can be improved by adjusting the weight values corresponding to the different models). When calculating the similarity between the search term feature vector and the text feature vector, the cosine similarity formula may be used for the calculation.

703: invoking the trained multimodal large language model to process the search term, image information, and text description information, so as to obtain the second multimodal feature vector and search term feature vector of the candidate product.

In the disclosed embodiments, the second multimodal feature vector and the search term feature vector have relatively high dimensionality. To reduce the computational load during subsequent image-text relevance calculations, dimensionality reduction may be performed on the second multimodal feature vector and the search term feature vector. In one possible implementation, a fully connected layer may be added on the basis of the trained multimodal large language model, and this fully connected layer may be used to perform a linear transformation on the second multimodal feature vector and the search term feature vector, so as to directly output the second multimodal feature vector and the search term feature vector with lower dimensionality - for example, reducing the second multimodal feature vector and the search term feature vector from 768 dimensions to 256 dimensions. In another possible implementation, the structure of the trained multimodal large language model may be improved, and a fully connected layer may be added to the trained multimodal large language model, so that when the trained multimodal large language model is invoked to process the search term, the image information, and the text description information, the second multimodal feature vector and the search term feature vector with lower dimensionality are directly obtained. Of course, other methods may also be used to perform dimensionality reduction on the second multimodal feature vector and the search term feature vector, and the disclosed embodiments will not enumerate them one by one.

704: based on the search term feature vector and the second multimodal feature vector, calculating the image-text relevance score between the search term and the candidate product.

The image-text relevance score is used to reflect the degree of relevance between a search term and a candidate product from an image-text perspective, that is, the degree of relevance between the semantics of the search term and the image of the candidate product. The larger the image-text relevance score, the higher the degree of relevance between the search term and the candidate product from an image-text perspective; the smaller the image-text relevance score, the lower the degree of relevance between the search term and the candidate product from an image-text perspective. When calculating the image-text relevance score between the search term and the candidate product based on the search term feature vector and the second multimodal feature vector, the cosine similarity between the search term feature vector and the second multimodal feature vector may be calculated, and the obtained cosine similarity value is used as the image-text relevance score. The formula for calculating the cosine similarity is: $Similarity = \frac{AB}{\left|A\right| \left|B\right|} = \frac{{\sum }_{i = 1}^{n} {A}_{i} \times {B}_{i}}{\sqrt{{\sum }_{i = 1}^{n} {\left({A}_{i}\right)}^{2}} \times \sqrt{{\sum }_{i = 1}^{n} {\left({B}_{i}\right)}^{2}}}$

Here, Similarity is the cosine similarity value, *A* is the search term feature vector, *B* is the second multimodal feature vector, *Aᵢ* is the element in the search term feature vector at the *i*th dimension, *Bᵢ* is the element in the second multimodal feature vector at the *i*th dimension, and *n* is the number of dimensions of the search term feature vector (or the second multimodal feature vector).

705: based on the semantic relevance score and the image-text relevance score, calculating the total relevance score between the search term and the candidate product.

In embodiments of the present disclosure, different weight values may be pre-configured for the semantic relevance score and the image-text relevance score, respectively, and then, based on the weight values corresponding to the semantic relevance score and the image-text relevance score, respectively, a weighted calculation is performed on the semantic relevance score and the image-text relevance score to obtain the total relevance score of the search term and the candidate product. Here, the weight values configured for the semantic relevance score and the image-text relevance score are not fixed and may be dynamically adjusted based on the application results in actual search scenarios. When configuring the semantic relevance score and the image-text relevance score with different weight values, the following two methods are included but not limited to:

The first approach involves statistically computing the proportions of semantic relevance scores and image-text relevance scores accounted for under different categories, and performing offline fitting based on the proportions of semantic relevance scores and image-text relevance scores under different categories, to obtain the weight values corresponding respectively to the semantic relevance scores and image-text relevance scores under different categories. During application, the weight values corresponding respectively to the semantic relevance score and the image-text relevance score under a given category may be obtained based on the category to which the candidate product belongs.

The second approach: a model for determining the weight values corresponding to the semantic relevance score and the image-text relevance score may be trained. During application, the model may be invoked to determine the weight values corresponding to the semantic relevance score and the image-text relevance score, respectively.

Further, considering that different users have different preferences, and user preferences also affect users' clicks and conversions on candidate products, in view of this, based on the search term and user preference information, the regularized relevance score of the search term and the candidate product may be calculated. The regularized relevance score is used to reflect the degree of relevance between the search term and the candidate product from the perspective of user preference. If it is determined based on the text description information of the candidate product that the candidate product meets the user's preferences, it may be determined that the regularized relevance score of the search term and the candidate product is high; if it is determined based on the text description information of the candidate product that the candidate product does not meet the user's preferences, it may be determined that the regularized relevance score of the search term and the candidate product is low. Based on the obtained semantic relevance score, image-text relevance score, and regularized relevance score, by performing weighted calculation on the semantic relevance score, image-text relevance score, and regularized relevance score, the total relevance score of the search term and the candidate product may be obtained.

Compared with existing relevance calculation methods in some e-commerce scenarios, the present disclosure embodiments based on the multimodal large language model, taking into account both the image information and text description information of the product, and the like, achieve higher robustness in relevance scoring and more accurate calculation results. Since the relevance score no longer depends on the semantic relevance score between the search term and the text description information, even when there exist issues such as image-text mismatch, product title keyword stuffing, or excessively short titles, by calculating the image-text relevance score and the regularized relevance score and adjusting the weight values of different relevance scores, it is also possible to obtain better calculation results.

All the optional technical solutions described above may be combined in any manner to form optional embodiments of the present disclosure, and are not described herein again.

Based on the implementation environment shown in FIG. 2, the disclosed embodiments provide a label generation method. The method applies the trained multimodal large language model of FIG. 6 described above, taking server 502 in FIG. 1 as an example for executing the disclosed embodiments. Referring to FIG. 8, the method flow provided by the disclosed embodiments includes:
801: invoking the trained multimodal large language model, processing the search term corresponding to the candidate product, image information, and text description information to obtain the second multimodal feature vector.

In a search scenario, for candidate products retrieved by a search, labels are typically added to these candidate products so that they can subsequently be displayed based on user profiles and search results, thereby improving the user's click-through rate and conversion rate. For the retrieved candidate products, before generating labels for them, image normalization processing such as scaling and dimension transformation may be performed on the image information of the candidate products, and text normalization processing such as stop word removal and case unification may be performed on the text description information of the candidate products, so as to serve as input for subsequent models.

For any candidate product, invoking the trained multimodal large language model, processing the search term and image information and text description information corresponding to the candidate product, to obtain a second multimodal feature vector. Specifically, the title, category, product detail page information, model number, and other information included in the text description information may be concatenated, and then the text encoder of the trained multimodal large language model may be invoked to perform encoding to obtain a text feature vector, and the image encoder of the trained multimodal large language model may be invoked to encode the image information to obtain an image feature vector, and then the text feature vector and the image feature vector may be input into the Q-Former of the trained multimodal large language model, outputting a first multimodal feature vector. Next, the search term is input into the text encoder of the trained multimodal large language model for encoding, outputting a search term feature vector, and then the search term feature vector and the first multimodal feature vector are input into the Q-Former of the trained multimodal large language model, outputting the second multimodal feature vector corresponding to the candidate product, in which the image features associated with the search term and text description information in the second multimodal feature vector are enhanced, enabling the second multimodal feature vector to reflect various attributes of the candidate product.

Furthermore, in the embodiments of the present disclosure, the second multimodal feature vector has a relatively high dimensionality. To reduce the computational load in subsequent calculations, dimensionality reduction may be performed on the second multimodal feature vector. In one possible implementation, a fully connected layer may be added on the basis of the trained multimodal large language model, and this fully connected layer may be used to perform a linear transformation on the second multimodal feature vector, enabling direct output of a second multimodal feature vector with lower dimensionality, for example, reducing the second multimodal feature vector from 768 dimensions to 256 dimensions. In another possible implementation, the structure of the trained multimodal large language model may be modified by adding a fully connected layer to the above-mentioned trained multimodal large language model, so that when the trained multimodal large language model is invoked to process the search term, image information, and text description information, a second multimodal feature vector with lower dimensionality is directly obtained. Of course, other methods may also be used to perform dimensionality reduction on the second multimodal feature vector, and the embodiments of the present disclosure will not elaborate on them one by one.

It should be noted that the above takes generating labels for candidate products retrieved based on user-input search terms as an example. If the candidate product for which a label needs to be generated was not retrieved based on a user-input search term but was instead specified by a merchant, then the search term corresponding to that candidate product may be the search term most likely corresponding to that candidate product, as provided by the server.

802: acquiring the first instruction template corresponding to the preset-level category to which the candidate product belongs.

Considering that labels for products in different categories are different - for example, labels for products in the clothing category may be style and design, while labels for products in the sports category may be material, weight, brand, etc., for different application scenarios, the embodiments of the present disclosure may classify the different-level categories to which products belong, and set different instruction templates for different-level categories, where the number of instruction templates corresponding to each level category is at least one. Here, an instruction template is a designed natural language instruction used to describe the attributes to be output for a candidate product, so as to guide the model to generate the corresponding attributes.

For example, for products in the clothing category, the configured instruction template may be:
1. The material of this product is (please output the material of the product), and this instruction template is used to guide the model to generate the material of the clothing;
2. Please give the style of the corresponding clothes according to the information (please generate the corresponding product style based on the provided information), and this instruction template is used to guide the model to generate the style of the clothing.

For another example, for the 3C electronics field, the configured instruction template may be:

Please output the performance parameters of this product, and this instruction template is used to guide the model to generate the performance parameters of the product.

Further, for ease of subsequent application, the correspondence relationship between different-level categories and instruction templates may be stored.

In the disclosed embodiments, for any candidate product, the preset-level category to which the candidate product belongs may be obtained from the text description information of that candidate product, and then based on the preset-level category to which the candidate product belongs, the first instruction template corresponding to the preset-level category to which the candidate product belongs may be obtained from the correspondence relationship between different-level categories and instruction templates. The preset-level category is set as needed and may be a first-level category, a second-level category, or the like.

803: based on the second multimodal feature vector and the first instruction template, generating the first label of the candidate product under the preset-level category.

In the embodiments of the present disclosure, the second multimodal feature vector is capable of reflecting different attributes of a candidate product, and the first instruction template is used to indicate the attributes of the candidate product to be output. When the second multimodal feature vector and the first instruction template are input into the large language model, the large language model processes the second multimodal feature vector through a multi-layer transformer in accordance with the instructions of the first instruction template, outputting the token with the highest probability in the context indicated by the first instruction template, as the first label generated for the candidate product. The number of first labels is the same as the number of first instruction templates: if there is one first instruction template, one first label is generated; if there are at least two first instruction templates, at least two labels are generated. To facilitate distinguishing the first labels generated based on each first instruction template, after outputting the token with the highest probability in the context indicated by each first instruction template based on each first instruction template, an end symbol may be appended to the end of the token to indicate the completion of one output, and the end symbol may be <EOF>. Using the method provided by the embodiments of the present disclosure, at least one first label can ultimately be generated for each candidate product, and by combining these first labels, the final label for each candidate product can be obtained.

Considering that large language models have certain accuracy issues, in order to improve the reliability of the first label generated for candidate products, a manual evaluation of the first label corresponding to the candidate product may be performed. If the evaluation result of the first label is reliable, the first label corresponding to the candidate product is retained; if the evaluation result of the first label is unreliable, the user may re-configure the corresponding instruction template for the preset-level category to which the candidate product belongs, i.e., the second instruction template, and the server obtains the second instruction template input by the user for the preset-level category, and updates the first instruction template corresponding to the preset-level category in the stored correspondence relationship to the second instruction template. Optionally, during the evaluation process, duplicate labels may also be filtered out to avoid interference caused by duplicate labels to the user.

Further, after updating the first instruction template corresponding to the preset-level category in the correspondence relationship to a second instruction template, a second label for the candidate product under the preset-level category will also be generated based on the second multimodal feature vector and the second instruction template of the candidate product. Specifically, the large language model may be invoked again to process the second multimodal feature vector and the second instruction template of the candidate product, so as to obtain the second label for the candidate product under the preset-level category. Of course, the generated second label also needs to undergo manual evaluation; if the evaluation result is unreliable, the user needs to set a corresponding instruction template again for the preset-level category to which the candidate product belongs, until the evaluation result of the generated label is reliable.

The embodiments of the present disclosure may construct different instruction templates according to the requirements of actual scenarios. By adopting an instruction/prompt learning approach, downstream large language models are guided to generate labels specifically for products based on instruction templates, combined with the text description information and image information of the products, thereby greatly reducing the cost of manual annotation. Compared with the traditional approach of matching within an existing template library based on neural networks, the labels generated by this approach are more diverse in effect.

In a search scenario, by using the labels generated for products by the embodiments of the present disclosure in combination with user profiles, products with corresponding or similar labels can be presented to users, thereby improving the users' click-through rate and conversion rate.

All the optional technical solutions described above may be combined in any manner to form optional embodiments of the present disclosure, and are not described herein again.

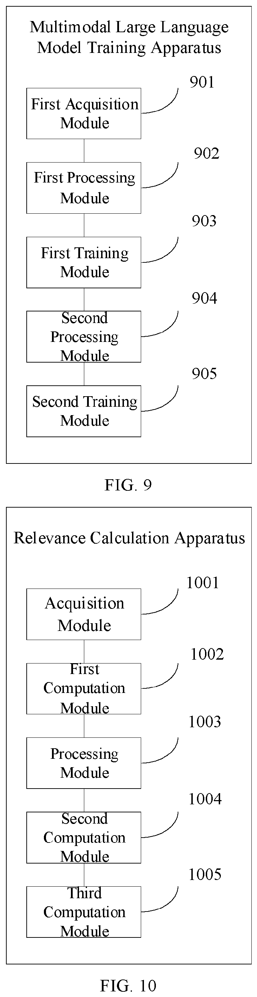

Please refer to FIG. 9, which illustrates a schematic structural diagram of a multimodal large language model training apparatus provided by an embodiment of the present disclosure. The apparatus may be implemented by software, hardware, or a combination of both, as all or part of an electronic device. The apparatus comprises:
a first acquisition module 901, configured to acquire a sample search term and a sample product, where the sample product has image information and text description information;
a first processing module 902, configured to invoke a pre-trained multimodal large language model to process the sample product's image information and text description information, so as to obtain a sample text feature vector, a sample image feature vector, and a sample first multimodal feature vector of the sample product, where image features related to textual description information in the sample first multimodal feature vector are enhanced;
a first training module 903, configured to train the pre-trained multimodal large language model based on the sample text feature vector, sample image feature vector, and sample first multimodal feature vector of the sample product, to obtain a multimodal large language model;
a second processing module 904, configured to invoke the multimodal large language model to process the sample search term and the image information and text description information of the sample product, to obtain a sample search term feature vector and the sample product's first multimodal feature vector and sample second multimodal feature vector, where image features related to both the text description information and the search term in the sample second multimodal feature vector are enhanced;
a second training module 905, configured to train the multimodal large language model based on the sample search term feature vector and the first multimodal feature vector and sample second multimodal feature vector of the sample product, to obtain a trained multimodal large language model, the trained multimodal large language model being configured to generate, based on a search term and the image information and text description information of a product, a second multimodal feature vector of the product.

In another embodiment of the present disclosure, the first processing module 902 is configured to invoke a pre-trained multimodal large language model to perform feature extraction on the text description information of the sample product, to obtain a sample text feature vector of the sample product; to perform feature extraction on the image information of the sample product to obtain a sample image feature vector of the sample product; to fuse the sample text feature vector of the sample product and the sample image feature vector, to obtain the sample first multimodal feature vector of the sample product.

In another embodiment of the present disclosure, the sample product is annotated with a label characterizing the relevance between image information and text description information, and a first training module 903 is configured to acquire, based on the sample first multimodal feature vector of the sample product, a label characterizing the relevance between the image information and the text description information of the sample product; and train, based on the first overall objective loss function, the sample text feature vector of the sample product and the sample image feature vector, and the generated label and annotated label corresponding to the sample product, the pre-trained multimodal large language model to obtain the multimodal large language model.

In another embodiment of the present disclosure, the first overall objective loss function comprises a first image-text matching loss function and a first image-text contrastive loss function, and the first training module 903 is configured to input the generated label and the annotated label corresponding to the sample product into the first image-text matching loss function to obtain a first image-text matching loss function value; input the sample text feature vector and the sample image feature vector into the first image-text contrastive loss function to obtain a first image-text contrastive loss function value; determine, based on the first image-text matching loss function value and the first image-text contrastive loss function value, a first overall objective loss function value; adjust, based on the first overall objective loss function value, the model parameters of the pre-trained multimodal large language model to obtain a multimodal large language model.

In another embodiment of the present disclosure, the second processing module 904 is configured to invoke the multimodal large language model to perform feature extraction on the text description information of the sample product, to obtain a text feature vector of the sample product; to perform feature extraction on the image information of the sample product to obtain an image feature vector of the sample product; to fuse the text feature vector of the sample product and the image feature vector to obtain the first multimodal feature vector of the sample product; to perform feature extraction on the sample search term to obtain a sample search term feature vector; and to fuse the sample search term feature vector with the first multimodal feature vector of the sample product, respectively, to obtain a sample second multimodal feature vector of the sample product.

In another embodiment of the present disclosure, the sample product is annotated with a label characterizing the relevance between the sample product and the sample search term, second training module 905, configured to, based on the sample second multimodal feature vector of the sample product, acquire a label characterizing the sample product's relevance to the sample search term; based on the second overall objective loss function, the first multimodal feature vector and the sample search term feature vector of the sample product, and the generated label and annotated label corresponding to the sample product, train the multimodal large language model to obtain a trained multimodal large language model.

In another embodiment of the present disclosure, the second overall objective loss function comprises a second image-text matching loss function and a second image-text contrastive loss function, the second training module 905 is configured to input the generated label and the annotated label corresponding to the sample product into the second image-text matching loss function to obtain a second image-text matching loss function value; input the first multimodal feature vector of the sample product and the sample search term feature vector into the second image-text contrastive loss function to obtain a second image-text contrastive loss function value; based on the second image-text matching loss function value and the second image-text contrastive loss function value, determine a second overall objective loss function value; based on the second overall objective loss function value, adjust the model parameters of the multimodal large language model to obtain the trained multimodal large language model.

Please refer to FIG. 10, which illustrates a schematic structural diagram of a relevance calculation apparatus provided by an embodiment of the present disclosure. The apparatus applies the trained multimodal large language model of FIG. 6, and the apparatus may be implemented by software, hardware, or a combination of both, as all or part of an electronic device. The apparatus comprises:
an acquisition module 1001, configured to acquire a search term and candidate product retrieved based on the search term, where the candidate product has image information and text description information;
a first computation module 1002, configured to calculate, based on the search term and the text description information, a semantic relevance score between the search term and the candidate product;
a processing module 1003, configured to invoke the multimodal large language model that has been trained, to process the search term, image information, and text description information, so as to obtain the second multimodal feature vector and search term feature vector of the candidate product;
a second computation module 1004, configured to calculate, based on the search term feature vector and the second multimodal feature vector, an image-text relevance score between the search term and the candidate product;
a third computation module 1005, configured to calculate a total relevance score between the search term and the candidate product based on the semantic relevance score and the image-text relevance score.

In another embodiment of the present disclosure, the second computation module 1004 is configured to calculate a cosine similarity between the search term feature vector and the second multimodal feature vector, so as to obtain the image-text relevance score.

In another embodiment of the present disclosure, the third computation module 1005 is configured to perform a weighted calculation on the semantic relevance score and the image-text relevance score to obtain a total relevance score.

In another embodiment of the present disclosure, the apparatus further comprises:
a fourth computation module, configured to calculate, based on the text description information and user preference information, a regularized relevance score between the search term and the product;
a fifth computation module, configured to perform a weighted calculation on the semantic relevance score, the image-text relevance score, and the regularized relevance score, so as to obtain the total relevance score between the search term and the candidate product.

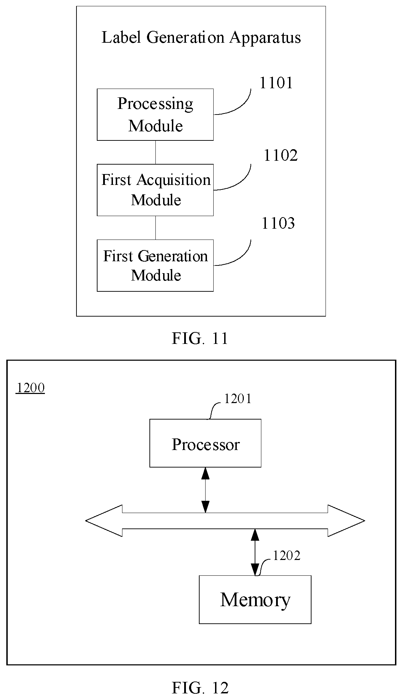

Please refer to FIG. 11, which illustrates a schematic structural diagram of a label generation apparatus provided by an embodiment of the present disclosure. The apparatus applies the trained multimodal large language model of FIG. 6, and the apparatus may be implemented by software, hardware, or a combination of both, as all or part of an electronic device. The apparatus comprises:
a processing module 1101, configured to invoke the trained multimodal large language model to process the search term corresponding to the candidate product, the image information, and the text description information, so as to obtain the second multimodal feature vector;
a first acquisition module 1102, configured to acquire a first instruction template corresponding to a preset-level category to which the candidate product belongs, where the first instruction template is used to describe the candidate product's attributes to be output;
a first generation module 1103, configured to generate a first label of the candidate product under the preset-level category based on the second multimodal feature vector and the first instruction template.

In another embodiment of the present disclosure, the first acquisition module 1102 is configured to acquire the first instruction template from a correspondence relationship between different-level categories and instruction templates, based on the preset-level category to which the candidate product belongs.

In another embodiment of the present disclosure, the apparatus further comprises:
a second acquisition module, configured to acquire, if the evaluation result of the first label is unreliable, a second instruction template input by a user for the preset-level category;
an update module, configured to update the first instruction template corresponding to the preset-level category in the correspondence relationship to the second instruction template.

In another embodiment of the present disclosure, the apparatus further comprises:
a second generation module, configured to generate a second label of the candidate product under the preset-level category based on the second multimodal feature vector and the second instruction template.

FIG. 12 illustrates a structural block diagram of an electronic device 1200 provided by an exemplary embodiment of the present disclosure. In general, the electronic device 1200 comprises: a processor 1201 and a memory 1202.

The processor 1201 may be implemented in at least one hardware form selected from DSP (Digital Signal Processing), FPGA (Field-Programmable Gate Array), and PLA (Programmable Logic Array). The processor 1201 may also include a main processor and a coprocessor, where the main processor is a processor for processing data in a wake state, and the coprocessor is a low-power processor for processing data in a standby state. In some embodiments, the processor 1201 may be integrated with a GPU (Graphics Processing Unit), which is responsible for rendering and drawing the content to be displayed on the display screen. In some embodiments, the processor 1201 may further include an artificial intelligence processor, which is used to process computing operations related to machine learning.

The memory 1202 may include one or more computer-readable storage media, which may be non-transitory computer-readable storage media, for example, the non-transitory computer-readable storage media may be CD-ROM (Compact Disc Read-Only Memory, read-only optical disc), ROM, RAM (Random Access Memory), magnetic tape, floppy disk, and optical data storage devices, etc. At least one computer program is stored in the computer-readable storage medium, and when the at least one computer program is executed, the multimodal large language model training method, or the relevance calculation method, or the label generation method described above can be implemented.

Of course, the electronic device described above may also include other components, such as input/output interfaces, communication components, etc. The input/output interface provides an interface between the processor and peripheral interface modules, and the peripheral interface modules may be output devices, input devices, etc. The communication component is configured to facilitate wired or wireless communication between the electronic device and other devices, etc.

Those skilled in the art will appreciate that the structure shown in FIG. 12 does not constitute a limitation on the electronic device 1200, and may include more or fewer components than illustrated, or combine certain components, or employ a different arrangement of components.

An embodiment of the present disclosure provides a computer-readable storage medium, wherein at least one computer program is stored in the computer-readable storage medium, and when the at least one computer program is executed by a processor, the above-mentioned multimodal large language model training method, or the relevance calculation method, or the label generation method can be implemented.

An embodiment of the present disclosure provides a computer program product, the computer program product comprising a computer program, and when the computer program is executed by a processor, the above-mentioned multimodal large language model training method, or the relevance calculation method, or the label generation method can be implemented.

Those skilled in the art can clearly understand that, for the convenience and brevity of description, the specific working processes of the systems, apparatuses, and units described above may refer to the corresponding processes in the foregoing method embodiments, and will not be repeated here.

The above embodiments are only used to illustrate the technical solutions of the present disclosure, and are not intended to limit the same; although the present disclosure has been described in detail with reference to the foregoing embodiments, those of ordinary skill in the art should understand that they may still modify the technical solutions described in the foregoing embodiments, or make equivalent substitutions for some of the technical features thereof; and such modifications or substitutions do not cause the essence of the corresponding technical solutions to depart from the spirit and scope of the technical solutions of the embodiments of the present disclosure.

## Claims

1. A multimodal large language model training method, wherein the method comprises:
acquiring a sample search term and a sample product, the sample product having image information and text description information;
invoking a pre-trained multimodal large language model to process the image information and text description information of the sample product, to obtain a sample text feature vector, a sample image feature vector, and a sample first multimodal feature vector of the sample product, wherein image features related to text description information are enhanced in the sample first multimodal feature vector;
training the pre-trained multimodal large language model based on the sample text feature vector, the sample image feature vector, and the sample first multimodal feature vector of the sample product, to obtain a multimodal large language model;
invoking the multimodal large language model to process the sample search term and the image information and text description information of the sample product, to obtain a sample search term feature vector and a first multimodal feature vector and a sample second multimodal feature vector of the sample product, wherein image features related to both text description information and search terms are enhanced in the sample second multimodal feature vector;
training the multimodal large language model based on the sample search term feature vector and the first multimodal feature vector and the sample second multimodal feature vector of the sample product, to obtain a trained multimodal large language model, the trained multimodal large language model being configured to generate a second multimodal feature vector of a product based on a search term and image information and text description information of the product.

2. A method according to claim 1, wherein the invoking the pre-trained multimodal large language model to process the image information and text description information of the sample product to obtain the sample text feature vector, sample image feature vector, and sample first multimodal feature vector of the sample product comprises:
invoking the pre-trained multimodal large language model to perform feature extraction on the text description information of the sample product to obtain the sample text feature vector of the sample product;
performing feature extraction on the image information of the sample product to obtain the sample image feature vector of the sample product;
fusing the sample text feature vector and the sample image feature vector of the sample product to obtain the sample first multimodal feature vector of the sample product.

3. A method according to claim 1, wherein the sample product is annotated with a label characterizing the correlation between the image information and the text description information, and the training the pre-trained multimodal large language model based on the sample text feature vector, sample image feature vector, and sample first multimodal feature vector of the sample product to obtain the multimodal large language model comprises:
generating, based on the sample first multimodal feature vector of the sample product, a label characterizing the correlation between the image information and the text description information of the sample product;
training the pre-trained multimodal large language model based on a first overall objective loss function, the sample text feature vector and sample image feature vector of the sample product, and the generated label and annotated label corresponding to the sample product, to obtain the multimodal large language model.

4. A method according to claim 3, wherein the first overall objective loss function comprises a first image-text matching loss function and a first image-text contrastive loss function, and the training the pre-trained multimodal large language model based on the first overall objective loss function, the sample text feature vector and sample image feature vector of the sample product, and the generated label and annotated label corresponding to the sample product, to obtain the multimodal large language model comprises:
inputting the generated label and annotated label corresponding to the sample product into the first image-text matching loss function to obtain a first image-text matching loss function value;
inputting the sample text feature vector and sample image feature vector into the first image-text contrastive loss function to obtain a first image-text contrastive loss function value;
determining a first overall objective loss function value based on the first image-text matching loss function value and the first image-text contrastive loss function value;
adjusting model parameters of the pre-trained multimodal large language model based on the first overall objective loss function value to obtain the multimodal large language model.

5. A method according to claim 1, wherein the invoking the multimodal large language model to process the sample search term and the image information and text description information of the sample product to obtain a sample search term feature vector and the first multimodal feature vector and sample second multimodal feature vector of the sample product comprises:
invoking the multimodal large language model to perform feature extraction on the text description information of the sample product, to obtain a text feature vector of the sample product;
performing feature extraction on the image information of the sample product, to obtain an image feature vector of the sample product;
fusing the text feature vector and the image feature vector of the sample product to obtain a first multimodal feature vector of the sample product;
performing feature extraction on the sample search term to obtain a sample search term feature vector;
fusing the sample search term feature vector with the first multimodal feature vector of the sample product to obtain a sample second multimodal feature vector of the sample product.

6. A method according to claim 1, wherein the sample product is annotated with a label characterizing a relevance between the sample product and the sample search term, and the training the multimodal large language model based on the sample search term feature vector, the first multimodal feature vector of the sample product, and the sample second multimodal feature vector to obtain a trained multimodal large language model comprises:
obtaining, based on the sample second multimodal feature vector of the sample product, a label characterizing the relevance between the sample product and the sample search term;
training the multimodal large language model based on a second overall objective loss function, the first multimodal feature vector of the sample product and the sample search term feature vector, and the generated label and the annotated label corresponding to the sample product, to obtain a trained multimodal large language model.

7. A method according to claim 6, wherein the second overall objective loss function comprises a second image-text matching loss function and a second image-text contrastive loss function, and the training the multimodal large language model based on the second overall objective loss function, the first multimodal feature vector of the sample product and the sample search term feature vector, and the generated label and the annotated label corresponding to the sample product to obtain a trained multimodal large language model comprises:
inputting the generated label and the annotated label corresponding to the sample product into the second image-text matching loss function to obtain a second image-text matching loss function value;
inputting the first multimodal feature vector of the sample product and the sample search term feature vector into the second image-text contrastive loss function to obtain a second image-text contrastive loss function value;
determining a second overall objective loss function value based on the second image-text matching loss function value and the second image-text contrastive loss function value;
adjusting model parameters of the multimodal large language model based on the second overall objective loss function value to obtain a trained multimodal large language model.

8. A relevance calculation method, wherein the method applies the trained multimodal large language model according to any one of claims 1 to 7, and the method comprises:
obtaining a search term and candidate product retrieved based on the search term, the candidate product having image information and text description information;
calculating a semantic relevance score between the search term and the candidate product based on the search term and the text description information;
invoking the trained multimodal large language model to process the search term, the image information, and the text description information to obtain a second multimodal feature vector of the candidate product and a search term feature vector;
calculating an image-text relevance score between the search term and the candidate product based on the search term feature vector and the second multimodal feature vector;
calculating a total relevance score between the search term and the candidate product based on the semantic relevance score and the image-text relevance score.

9. A method according to claim 8, wherein the method further comprises:
based on the text description information and user preference information, calculating a regularized relevance score between the search term and the candidate product;
performing a weighted calculation on the semantic relevance score, the image-text relevance score, and the regularized relevance score to obtain the total relevance score.

10. A label generation method, wherein the method applies the trained multimodal large language model according to any one of claims 1 to 7, the method comprising:
invoking the trained multimodal large language model to process a search term, image information, and text description information corresponding to a candidate product to obtain a second multimodal feature vector;
obtaining a first instruction template corresponding to a preset-level category to which the candidate product belongs, the first instruction template being used to describe an attribute to be output for the candidate product;
generating a first label of the candidate product under the preset-level category based on the second multimodal feature vector and the first instruction template.

11. A method according to claim 10, wherein the acquiring the first instruction template corresponding to the preset-level category to which the candidate product belongs comprises:
based on the preset-level category to which the candidate product belongs, acquiring the first instruction template from a correspondence relationship between different-level categories and instruction templates.

12. A method according to claim 11, wherein after generating the first label of the candidate product under the preset-level category based on the second multimodal feature vector and the first instruction template, the method further comprises:
if an evaluation result of the first label is unreliable, acquiring a second instruction template input by a user for the preset-level category;
updating the first instruction template corresponding to the preset-level category in the correspondence relationship to the second instruction template.

13. A method according to claim 12, wherein after updating the first instruction template corresponding to the preset-level category in the correspondence relationship to the second instruction template, the method further comprises:
generating a second label of the candidate product under the preset-level category based on the second multimodal feature vector and the second instruction template.

14. An electronic device, comprising a processor and a memory; the memory stores at least one program code; the at least one program code is configured to be invoked and executed by the processor to implement the multimodal large language model training method according to any one of claims 1 to 7, or the relevance calculation method according to claim 8 or 9, or the label generation method according to any one of claims 10 to 13.

15. A computer-readable storage medium, wherein the computer-readable storage medium stores at least one computer program, and the at least one computer program, when executed by a processor, is capable of implementing the multimodal large language model training method according to any one of claims 1 to 7, or the relevance calculation method according to claim 8 or 9, or the label generation method according to any one of claims 10 to 13.

16. A computer program product, wherein the computer program product comprises a computer program, and the computer program, when executed by a processor, is capable of implementing the multimodal large language model training method according to any one of claims 1 to 7, or the relevance calculation method according to claim 8 or 9, or the label generation method according to any one of claims 10 to 13.
